# EUROPEAN PATENT APPLICATION

(11) **EP 4 296 922 A1**
(43) Date of publication of application: **27.12.2023**
(21) Application number: 22787379.1
(22) Date of filing: 30.03.2022
(51) Int. Cl.: G06Q 10/08

(54) **METHOD AND APPARATUS FOR DETERMINING LOGISTICS PRODUCT, AND ELECTRONIC DEVICE AND COMPUTER-READABLE MEDIUM**

(30) Priority: 15.04.2021 CN 202110406226
(71) Applicant: Beijing Jingdong Zhenshi Information Technology Co., Ltd., Beijing 100086 (CN)
(72) Inventor: CAO, He, Beijing 100086 (CN)
(74) Representative: Huang, Liwei
(86) International application number: PCT/CN2022/083926
(87) International publication number: WO 2022/218151

(57) **Abstract**

The examples of the present disclosure disclose a method and apparatus for determining a logistics product, an electronic device, and a medium. A specific implementation manner of the method includes: obtaining mailing information related to a target article and filled by a target user in advance; according to logistics property information of logistics products, screening out at least one logistics product that matches article property information and article mailing service information from the logistics products, so as to obtain a logistics product set after the first screening; screening out the logistics products with collection station information and delivery station information from the logistics product set after the first screening, so as to obtain a logistics product set after the second screening, where the collection station information and the delivery station information involve stations associated with article mailing address information; and according to the logistics product set after the second screening, determining a target logistics product for mailing the target article. By means of the implementation manner, the target logistics product for mailing the target article may be quickly and efficiently determined.

## Description

### CROSS REFERENCE TO RELATED APPLICATIONS

This patent application is a Europe National Stage of International Application No. PCT/CN2022/083926, filed on March 30, 2022, which claims the priority to Chinese Patent Application No. 202110406226.1, filed on April 15, 2021 and entitled "Method and Apparatus for Determining Logistics Product, Electronic Device, and Computer-Readable Medium", the entire disclosures of which are hereby incorporated by reference.

### TECHNICAL FIELD

The examples of the present disclosure relate to the technical field of computers, and specifically relates to a method and apparatus for determining a logistics product, an electronic device, and a computer-readable medium.

### BACKGROUND

At present, there are various logistics products on the market, and each logistics product has a relatively unique advantage in a certain aspect. In addition, a user often only supports an ordering manner "with a logistics product" in various ordering platforms. For mailing for an article, a usual manner adopted is: requiring the user to choose which logistics product to use. Afterwards, relevant information of the article to be mailed is filled in, and a system will display relevant information such as a price of the logistics product, a cost of the logistics product, a value-added expense of the logistics product, estimated delivery time of the logistics product, and estimated arrival time of the logistics product.

### SUMMARY

The summary section of the present disclosure is intended to briefly introduce concepts, and these concepts will be described in detail in the specific implementation manner section later. The summary section of the present disclosure is neither intended to identify key features or necessary features of the claimed technical solutions, nor intended to limit the scope of the claimed technical solutions.

Some examples of the present disclosure propose a method and apparatus for determining a logistics product, an electronic device, and a computer-readable medium to solve one or more of the technical problems mentioned in the background section above.

In a first aspect, some examples of the present disclosure provide a method for determining a logistics product, and the method includes: obtaining mailing information related to a target article and filled by a target user in advance, where the mailing information includes: article mailing address information, article property information, and article mailing service information; according to logistics property information of logistics products, screening out at least one logistics product that matches the article property information and the article mailing service information from the logistics products, so as to obtain a logistics product set after the first screening; screening out the logistics products with collection station information and delivery station information from the logistics product set after the first screening, so as to obtain a logistics product set after the second screening, where the collection station information and the delivery station information are station information associated with the article mailing address information; and according to the logistics product set after the second screening, determining a target logistics product for mailing the target article.

In a second aspect, some examples of the present disclosure provide an apparatus for determining a logistics product, and the apparatus is used for: obtaining mailing information related to a target article and filled by a target user in advance, where the mailing information includes: article mailing address information, article property information, and article mailing service information; according to logistics property information of logistics products, screening out at least one logistics product that matches the article property information and the article mailing service information from the logistics products, so as to obtain a logistics product set after the first screening; screening out the logistics products with collection station information and delivery station information from the logistics product set after the first screening, so as to obtain a logistics product set after the second screening, where the collection station information and the delivery station information are station information associated with the article mailing address information; and according to the logistics product set after the second screening, determining a target logistics product for mailing the target article.

In a third aspect, some examples of the present disclosure provide an electronic device, and the electronic device includes: at least one processor; and a storage apparatus in which at least one program is stored, and when the at least one program is executed by the at least one processor, the at least one processor is enabled to realize the method described in any realization manner in the first aspect.

In a fourth aspect, some examples of the present disclosure provide a computer-readable medium in which a computer program is stored, where when the program is executed by a processor, the method described in any realization manner in the first aspect is realized.

### BRIEF DESCRIPTION OF THE DRAWINGS

The above and other features, advantages and aspects of the examples of the present disclosure will become more apparent by combining with the drawings and referring to the following specific implementation manners. Throughout the drawings, identical or similar marks of the drawings represent identical or similar elements. It should be understood that the drawings are schematic, and the originals and elements may not necessarily be drawn to scale.
FIG. 1 to FIG. 2 are schematic diagrams of an application scenario of a method for determining a logistics product according to some examples of the present disclosure;
FIG. 3 is a flow diagram of some examples of the method for determining a logistics product according to the present disclosure;
FIG. 4 is a flow diagram of other examples of the method for determining a logistics product according to the present disclosure;
FIG. 5 is a schematic structural diagram of some examples of an apparatus for determining a logistics product according to the present disclosure; and
FIG. 6 is a schematic structural diagram of an electronic device suitable for realizing some examples of the present disclosure.

### DETAILED DESCRIPTION OF EMBODIMENTS

The examples of the present disclosure will be described in greater detail below with reference to the drawings. Although some examples of the present disclosure are shown in the drawings, it should be understood that, the present disclosure may be realized in various forms and should not be limited to the examples elaborated herein. On the contrary, these examples are provided for a more thorough and complete understanding of the present disclosure. It should be understood that, the drawings and examples of the present disclosure are only for illustrative purposes and are not intended to limit the protection scope of the present disclosure.

In addition, it needs to be noted that, for the convenience of description, only the parts related to the relevant invention are shown in the drawings. Without conflict, the examples and the features in the examples in the present disclosure may be combined with each other.

It needs to be noted that, the concepts such as "first" and "second" mentioned in the present disclosure are only used for distinguishing different apparatuses, modules or units, and are not intended to limit the order or interdependence relations of the functions executed by these apparatuses, modules or units.

It needs to be noted that, the modifications of "one" and "a plurality of" mentioned in the present disclosure are schematic rather than restrictive, and those skilled in the art should understand that, unless otherwise explicitly stated in the context, the "one" and "a plurality of" should be understood as "one or more".

The names of messages or information exchanged among a plurality of apparatuses in the implementation manners of the present disclosure are only for illustrative purposes and are not intended to limit the scope of these messages or information.

In a related method for determining a logistics product, for example, a user chooses which logistics product to use and then fills in relevant information of an article to be mailed, there are often a technical problem below: a logistics product suitable for the user cannot be effectively recommended for the user, so that poor user experience is caused. In addition, unsuitable logistics products may have the problems of being high in time consumption and unable to deliver according to scheduled time. Therefore, low mailing efficiency is caused.

In order to solve the problems described above, some examples of the present disclosure propose a method and apparatus for determining a logistics product, so that the target logistics product for mailing the target article may be quickly and efficiently determined.

The present disclosure will be described below in detail by referring to the drawings and combining with the examples.

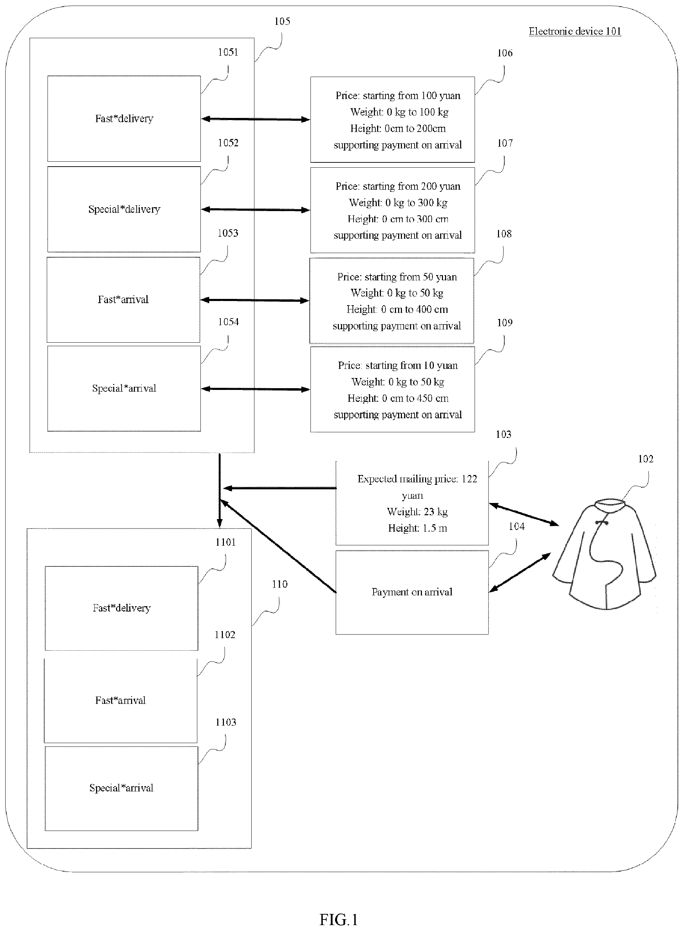

FIG. 1 to FIG. 2 are schematic diagrams of an application scenario of a method for determining a logistics product according to some examples of the present disclosure.

In the application scenario of FIG. 1 to FIG. 2, an electronic device 101 may first obtain mailing information related to a target article 102 and filled by a target user in advance. The mailing information includes: article mailing address information 114, article property information 103, and article mailing service information 104. In the application scenario, the article mailing address information 114 may be: "Room 3101, Building 3, ** Residential District, ** Street, Chaoyang District, Beijing". The article property information 103 may be: "price: 122 yuan, weight: 23 kg, and height: 1.5 m". The article mailing service information 104 may be: "payment on arrival". Afterwards, according to logistics property information of logistics products 105, at least one logistics product that matches the article property information 103 and the article mailing service information 104 is screened out from the logistics products 105, so as to obtain a logistics product set 110 after the first screening. In the application scenario, the logistics products 105 may include: fast*delivery 1051, special*delivery 1052, fast*arrival 1053, and special*arrival 1054. The logistics property information 106 corresponding to the fast*delivery 1051 may be: "expected mailing price: starting from 100 yuan, weight: 0 kg to 100 kg, height: 0 cm to 200 cm, and supporting payment on arrival". The logistics property information 107 corresponding to the special *delivery 1052 may be: "price: starting from 200 yuan, weight: 0 kg to 300 kg, height: 0 cm to 300 cm, and supporting payment on arrival". The logistics property information 108 corresponding to the fast*arrival 1053 may be: "price: starting from 50 yuan, weight: 0 kg to 50 kg, height: 0 cm to 400 cm, and supporting payment on arrival". The logistics property information 109 corresponding to the special*arrival 1054 may be: "price: starting from 10 yuan, weight: 0 kg to 50 kg, height: 0 cm to 450 cm, and supporting payment on arrival". Due to that the price of the fast*delivery 1052 is higher than an expected mailing price of the target user, the logistics product set 110 after the first screening may include: fast*delivery 1101, fast*arrival 1102 and special*arrival 1103. The fast*delivery 1051 corresponds to the fast*delivery 1101. The fast*arrival 1102 corresponds to the fast*arrival 1053. The special*arrival 1103 corresponds to the special*arrival 1054. Then the logistics products with collection station information and delivery station information are screened out from the logistics product set 110 after the first screening, so as to obtain a logistics product set 115 after the second screening. The collection station information and the delivery station information are station information associated with the article mailing address information 114. The station information 111 corresponding to the fast*delivery 1101 may be: "station information: Beijing collection station information and Beijing delivery station information". The station information 112 corresponding to the fast*arrival 1102 may be: "station information: Shanghai collection station information and Shanghai delivery station information". The station information 113 corresponding to the special*arrival 1103 may be: "station information: Beijing collection station information and Beijing delivery station information". Therefore, the logistics product set 115 after the second screening includes: fast*delivery 1151 and special*arrival 1152. The fast*delivery 1151 corresponds to the fast*delivery 1101. The special*arrival 1152 corresponds to the special*arrival 1103. Finally, according to the logistics product set 115 after the second screening, a target logistics product 116 for mailing the target article 102 is determined. Alternatively, the mailing time corresponding to the fast*delivery 1151 may be: "mailing time: one day". The mailing time corresponding to the special*arrival 1152 may be: "mailing time: five days". However, the expected arrival time for the user is: "arrival time of the target article: within two days". Therefore, the target logistics product 116 may be obtained. The target logistics product 116 may be fast*delivery.

It needs to be noted that, the electronic device 101 may be hardware or software. While being hardware, the electronic device may be realized as a distributed cluster composed of a plurality of servers or terminal devices, or may be realized as a single server or a single terminal device. While being embodied as software, the electronic device may be installed in the above-listed hardware device. The electronic device may be realized as a plurality of software or software modules for providing distributed services, or may be realized as single software or software module. Specific limitations are not provided here.

It should be understood that, the number of electronic devices in FIG. 1 is only schematic. Any number of electronic devices may be configured according to realization requirements.

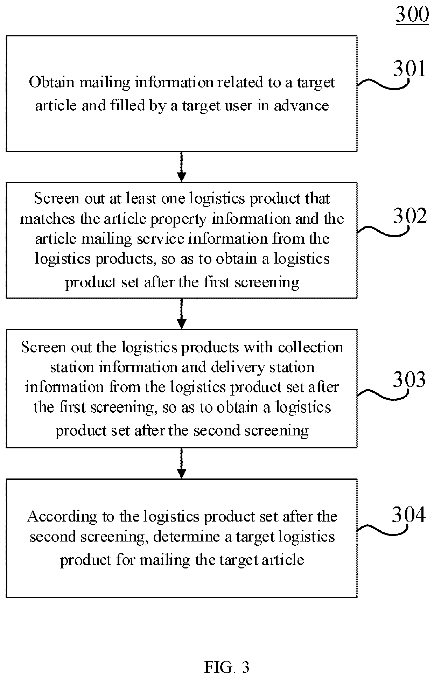

Continuing to refer to FIG. 3, a flow 300 of some examples of the method for determining a logistics product according to the present disclosure is shown. The method for determining a logistics product includes the following steps:

Step 301, mailing information related to a target article and filled by a target user in advance is obtained.

In some examples, an executing subject (such as the electronic device shown in FIG. 1) of the method for determining a logistics product may obtain, in a wired connection manner or a wireless connection manner, mailing information related to a target article and filled by a target user in advance. The mailing information includes: article mailing address information, article property information, and article mailing service information. The target article may be an article to be mailed by the target user. The article mailing address information may be address information for mailing the target article by the target user. The article property information may be property information of the target article, such as height information of the target article, width information of the target article, price information of the target article, brand information of the target article, and raw material information of the target article. The article mailing service information may be mailing service that the target user hopes the logistics product may provide. For example, the target user hopes the logistics product to provide payment-on-arrival service. The logistics products may be various types of logistics for mailing articles. The article mailing service information may further include: insurance service, designated receipt service, signing and return service, short message notification service, and heavy goods delivery-upstairs service.

Step 302, according to logistics property information of logistics products, at least one logistics product that matches the article property information and the article mailing service information is screened out from the logistics products, so as to obtain a logistics product set after the first screening.

In some examples, the executing subject may, according to logistics property information of logistics products, screen out at least one logistics product that matches the article property information and the article mailing service information from the logistics products, so as to obtain a logistics product set after the first screening. The logistics products may be various types of logistics for mailing articles, such as special*delivery. The logistics property information may include: time information for mailing articles by the logistics products, weight information of articles capable of being mailed by the logistics products, and address information of the articles capable of being mailed by the logistics products.

As an example, the logistics property information may be a price range required by the logistics products for mailing articles. The article property information may be price information of the target article. Therefore, logistics products with the price information of the target article, which is within the price range for mailing articles, and related to the article mailing service information, are screened out from the logistics products, so as to obtain a logistics product set after the first screening.

In some alternative realization manners of some examples, the logistics property information includes: weight requirement information of the article to be mailed, height requirement information of the article to be mailed, width requirement information of the article to be mailed, length requirement information of the article to be mailed, and temperature requirement information of the article to be mailed; and the according to logistics property information of logistics products, screening out at least one logistics product that matches the article property information and the article mailing service information from the logistics products, so as to obtain a logistics product set after the first screening may include the following steps: screening out logistics products with the article property information of the target article, which meets the weight requirement information, the height requirement information, the width requirement information, the length requirement information and the temperature requirement information, and related to the article mailing service information, so as to obtain a logistics product set after the first screening. The logistics products related to the article mailing service information may be logistics products capable of providing article mailing services. For example, the article mailing service information may be payment on arrival, and the logistics products related to the article mailing service information may be logistics products capable of providing payment on arrival. The height requirement information may be that the height of the article to be mailed is within a certain range. The weight requirement information may be that the weight of the article to be mailed is within a certain range. The width requirement information may be that the width of the article to be mailed is within a certain range. The length requirement information may be that the length of the article to be mailed is within a certain range. The temperature requirement information may be that the temperature of the article to be mailed is within a certain range.

Step 303, the logistics products with collection station information and delivery station information are screened out from the logistics product set after the first screening, so as to obtain a logistics product set after the second screening.

In some examples, the executing subject may screen out the logistics products with collection station information and delivery station information from the logistics product set after the first screening, so as to obtain a logistics product set after the second screening. The collection station information and the delivery station information are station information associated with the article mailing address information. The station information associated with the article mailing address information may be the name of a station for mailing the article to the article mailing address information. The collection station information and the delivery station information may be determined by querying four-level addresses of collection and delivery.

As an example, the executing subject may search to determine whether station information associated with the article mailing address information exists in at least one collection station information and at least one delivery station information which correspond to each logistics product in the logistics product set after the first screening or not. Therefore, the logistics products with collection station information and delivery station information may be screened out from the logistics product set after the first screening, so as to obtain a logistics product set after the second screening. The collection station information may be station name information for collecting the article to be mailed. The delivery station information may be station name information for delivering the article to be mailed.

Step 304, according to the logistics product set after the second screening, a target logistics product for mailing the target article is determined.

In some examples, the executing subject may, according to the logistics product set after the second screening, determine a target logistics product for mailing the target article. As an example, the executing subject may determine the priority levels of the logistics products. Afterwards, according to the priority levels of the logistics products, the priority level of each logistics product in the logistics product set after the second screening is determined. Finally, the logistics product with the highest priority level in the logistics product set after the second screening is determined as the target logistics product.

In some alternative realization manners of some examples, the mailing information of the target logistics product is pushed to a terminal used by the target user. The mailing information may be the cost, time, and service information of the target logistics product for mailing the target article.

The examples of the present disclosure have the following beneficial effects: by means of the method for determining a logistics product, in some examples of the present disclosure, the target logistics product for mailing the target article may be quickly and efficiently determined. A logistics product suitable for the user cannot be effectively recommended for the user, so that poor user experience is caused. In addition, unsuitable logistics products may have the problems of being high in time consumption and unable to deliver according to scheduled time. Therefore, low mailing efficiency is caused. On the basis of this, according to the method for determining a logistics product, in some examples of the present disclosure, mailing information related to a target article and filled by a target user in advance may be first obtained. The mailing information includes: article mailing address information, article property information, and article mailing service information. The mailing information is obtained here for subsequent recommendation of a high-quality target logistics product for the target user. Afterwards, according to logistics property information of logistics products, at least one logistics product that matches the article property information and the article mailing service information, and meeting the requirement of the user for mailing the article, is screened out from the logistics products. Then the logistics products with collection station information and delivery station information are screened out from the logistics product set after the first screening, so that a logistics product set with station information for collecting and delivering the target article, after the second screening may be effectively screened out. The collection station information and the delivery station information are station information associated with the article mailing address information. Finally, according to the logistics product set after the second screening, a target logistics product for mailing the target article is effectively and quickly determined in various manners.

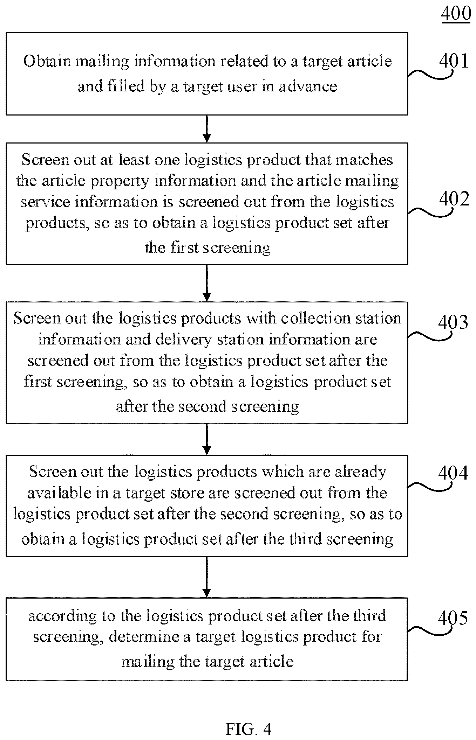

FIG. 4 shows a flow 400 of other examples of the method for determining a logistics product according to the present disclosure. The method for determining a logistics product includes the following steps:

Step 401, mailing information related to a target article and filled by a target user in advance is obtained.

Step 402, according to logistics property information of logistics products, at least one logistics product that matches the article property information and the article mailing service information is screened out from the logistics products, so as to obtain a logistics product set after the first screening.

Step 403, the logistics products with collection station information and delivery station information are screened out from the logistics product set after the first screening, so as to obtain a logistics product set after the second screening.

In some examples, steps 301 to 303 in the corresponding examples in FIG. 3 may be referred to for the specific realization of steps 401 to 403 and the technical effects brought by steps 401 to 403, which will not be further described here.

Step 404, the logistics products which are already available in a target store are screened out from the logistics product set after the second screening, so as to obtain a logistics product set after the third screening.

In some examples, the executing subject (such as the electronic device shown in FIG. 1) may screen out the logistics products which are already available in a target store from the logistics product set after the second screening, so as to obtain a logistics product set after the third screening. The target store may be a store where the target user executes value transfer operations on the target article. The target store may be an on-line store or an off-line store. It needs to be noted that, the logistics products available in each store are different. For example, a logistics product A, a logistics product B and a logistics product C are available in a store A. A logistics product A, a logistics product C and a logistics product D are available in a store B. A logistics product C, a logistics product F and a logistics product G are available in a store C.

As an example, the executing subject may determine the priority levels of the logistics products. Afterwards, according to the priority levels of the logistics products, the priority level of each logistics product in the logistics product set after the second screening is determined. Finally, the logistics products with priority levels which are greater than or equal to a predetermined level are screened out from the logistics product set after the second screening, so as to obtain a logistics product set after the third screening.

In some alternative realization manners of some examples, the according to the logistics product set after the third screening, determining the target logistics product for mailing the target article may include the following steps:

Step 1, in response to the determination for that a target logistics product exists in the logistics product set after the third screening, at least one target logistics product is determined. The target logistics product includes: logistics products of the type of same-city mailing. The target logistics product may be a specific logistics product. The logistics products of the type of same-city mailing may be the logistics products supporting that delivery addresses and mailing addresses for mailing articles are in the same city. The logistics products of the type of same-city mailing may be determined through a system O2O.

The reason for determining the target logistics product here is that: the article may be mailed more efficiently and less time may be consumed through using the target logistics product for mailing the target article. As an example, for the logistics products of the type of same-city mailing, the article may be quickly and efficiently mailed through using the type of same-city mailing.

Step 2, logistics products with routes to reach the collection station information and the delivery station information are screened out from the at least one target logistics product, so as to obtain a logistics product set after the fourth screening. The executing subject may first verify whether each target logistics product in the at least one target logistics product has a route to reach the collection station information and the delivery station information by calling a routing system. Afterwards, according to a verification result, logistics products with routes to reach the collection station information and the delivery station information are screened out from the at least one target logistics product, so as to obtain a logistics product set after the fourth screening.

The reason for determining the logistics products with routes to reach the collection station information and the delivery station information here is that: higher efficiency may be achieved and less time may be consumed. The occurrence of logistics products that cannot deliver the target article to an address required by the target user in the at least one target logistics product is avoided. The logistics efficiency is increased indirectly.

As an example, for the logistics products of the type of same-city mailing, the article may be quickly and efficiently mailed through using the type of same-city mailing.

Step 3, in response to the determination for that the target store sets priority levels for the logistics product set after the fourth screening, the priority level set by the target store in advance, of each logistics product in the logistics product set after the fourth screening is obtained. The target store sets a priority level for each logistics product in the logistics products in advance. Therefore, the priority level of each logistics product in the logistics product set after the fourth screening may be determined. The priority levels of the logistics products may represent that the logistics products with low prices are prioritized to be configured. The priority levels of the logistics products may also represent that the logistics products with high efficiency are prioritized to be configured.

Alternatively, the logistics products which are already available in the target store are obtained through calling a target interface. The target interface is related to the logistics product opening information of the target store.

Step 4, the logistics product with the priority level which meets a target condition in the logistics product set after the fourth screening is determined as the target logistics product. The target condition is whether the priority level of the logistics product is the highest.

Alternatively, the step further includes:
Step 1, in response to the determination for that the target logistics product does not exist in the logistics product set after the third screening, logistics products with routes to reach the collection station information and the delivery station information are screened out from the logistics product set after the third screening, so as to obtain a logistics product set after the fifth screening.
Step 2, in response to the determination for that the target store sets priority levels for the logistics product set after the fifth screening, the priority level of each logistics product in the logistics product set after the fifth screening is obtained.
Step 3, the logistics product with the priority level which meets the target condition in the logistics product set after the fifth screening is determined as the target logistics product. The target condition is whether the priority level of the logistics product is the highest.

Alternatively, the step further includes:
Step 1, in response to the determination for that the target store does not set priority levels for the logistics product set after the fifth screening, alternative priority levels of the logistics products are determined. The alternative priority levels of the logistics products may be set in advance.
Step 2, according to the alternative priority levels of the logistics products, the priority level of each logistics product in the logistics product set after the fifth screening is determined.
Step 3, the logistics product with the priority level which meets the target condition in the logistics product set after the fifth screening is determined as the target logistics product. The target condition is whether the priority level of the logistics product is the highest.
Step 405, according to the logistics product set after the third screening, a target logistics product for mailing the target article is determined.

In some examples, the executing subject may, according to the logistics product set after the third screening, determine a target logistics product for mailing the target article. As an example, the executing subject may determine the priority levels of the logistics products. Afterwards, according to the priority levels of the logistics products, the priority level of each logistics product in the logistics product set after the third screening is determined. Finally, the logistics product with the highest priority level in the logistics product set after the third screening is determined as the target logistics product.

It may be seen from FIG. 4 that, compared with the descriptions of some examples corresponding to FIG. 3, the flow 400 of the method for determining a logistics product in some examples corresponding to FIG. 4 highlights the specific steps of according to the logistics product set after the second screening, determining a target logistics product for mailing the target article. Therefore, according to the solutions described in these examples, the logistics product set after the second screening is further screened through determining the logistics products which are already available in the target store, so that a suitable logistics product may be determined more efficiently and accurately for the target user.

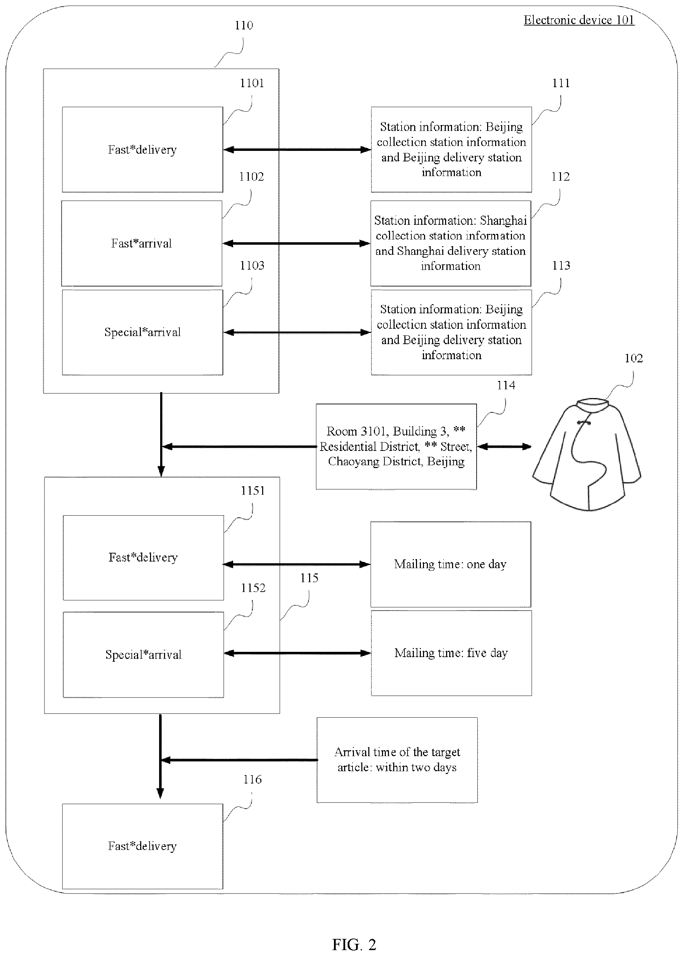

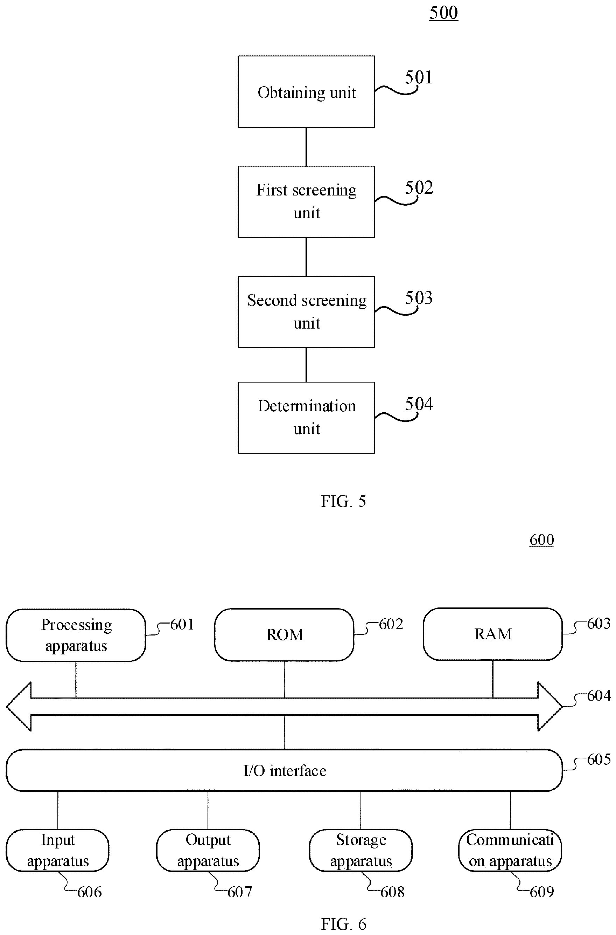

Referring to FIG. 5, as a realization for the method shown in the above drawings, the present disclosure provides some examples of an apparatus for determining a logistics product, these apparatus examples correspond to the method examples shown in FIG. 2, and the apparatuses specifically may be applied to various electronic devices.

As shown in FIG. 5, an apparatus 500 for determining a logistics product includes: an obtaining unit 501, a first screening unit 502, a second screening unit 503, and a determination unit 504. The obtaining unit 501 is configured to: obtain mailing information related to a target article and filled by a target user in advance, where the mailing information includes: article mailing address information, article property information, and article mailing service information. The first screening unit 502 is configured to: according to logistics property information of logistics products, screen out at least one logistics product that matches the article property information and the article mailing service information from the logistics products, so as to obtain a logistics product set after the first screening. The second screening unit 503 is configured to: screen out the logistics products with collection station information and delivery station information from the logistics product set after the first screening, so as to obtain a logistics product set after the second screening, where the collection station information and the delivery station information involve stations associated with the article mailing address information. The determination unit 504 is configured to: according to the logistics product set after the second screening, determine a target logistics product for mailing the target article.

In some alternative realization manners of some examples, the apparatus 500 further includes: a pushing unit (not shown in the drawings). The pushing unit may be configured to: push the mailing information of the target logistics product to a terminal used by the target user.

In some alternative realization manners of some examples, the determination unit 504 in the apparatus 500 may be configured to: screen out the logistics products which are already available in a target store from the logistics product set after the second screening, so as to obtain a logistics product set after the third screening, where the target store is a store for mailing the target article; and according to the logistics product set after the third screening, determine the target logistics product for mailing the target article.

In some alternative realization manners of some examples, the determination unit 504 in the apparatus 500 may be configured to: in response to the determination for that a target logistics product exists in the logistics product set after the third screening, determine at least one target logistics product, where the target logistics product includes: logistics products of the type of same-city mailing; screen out logistics products with routes to reach the collection station information and the delivery station information from the at least one target logistics product, so as to obtain a logistics product set after the fourth screening; in response to the determination for that the target store sets priority levels for the logistics product set after the fourth screening, obtain the priority level set by the target store in advance, of each logistics product in the logistics product set after the fourth screening; and determine the logistics product with the priority level which meets a target condition in the logistics product set after the fourth screening as the target logistics product.

In some alternative realization manners of some examples, the determination unit 504 in the apparatus 500 may be configured to: in response to the determination for that the target logistics product does not exist in the logistics product set after the third screening, screen out logistics products with routes to reach the collection station information and the delivery station information from the logistics product set after the third screening, so as to obtain a logistics product set after the fifth screening; in response to the determination for that the target store sets priority levels for the logistics product set after the fifth screening, obtain the priority level of each logistics product in the logistics product set after the fifth screening; and determine the logistics product with the priority level which meets the target condition in the logistics product set after the fifth screening as the target logistics product.

In some alternative realization manners of some examples, the logistics property information includes: weight requirement information of the article to be mailed, height requirement information of the article to be mailed, width requirement information of the article to be mailed, length requirement information of the article to be mailed, and temperature requirement information of the article to be mailed; and the first screening unit 502 in the apparatus 500 may be configured to: screen out logistics products with the article property information of the target article, which meets the weight requirement information, the height requirement information, the width requirement information, the length requirement information and the temperature requirement information, and related to the article mailing service information, so as to obtain a logistics product set after the first screening.

In some alternative realization manners of some examples, the determination unit 504 in the apparatus 500 may be configured to: in response to the determination for that the target store does not set priority levels for the logistics product set after the fifth screening, determine alternative priority levels of the logistics products; according to the alternative priority levels of the logistics products, determine the priority level of each logistics product in the logistics product set after the fifth screening; and determine the logistics product with the priority level which meets the target condition in the logistics product set after the fifth screening as the target logistics product.

It may be understood that, the units recorded in the apparatus 500 correspond to the steps in the method described with reference to FIG. 3. Therefore, the operations, features, and the generated beneficial effects described above for the method are also applicable to the apparatus 500 and the units included therein, and will not be further described here.

Referring to FIG. 6 below, a schematic structural diagram of an electronic device (such as the electronic device in FIG. 1) 600 suitable for realizing some examples of the present disclosure is shown. The electronic device shown in FIG. 6 is only an example and should not bring any limitations on the functions and use scope of the examples of the present disclosure.

As shown in FIG. 6, the electronic device 600 may include a processing apparatus (such as a central processing unit, a graphics processor, etc.) 601, which may execute various appropriate actions and processing according to a program stored in a read-only memory (ROM) 602 or a program loaded from a storage apparatus 608 to a random access memory (RAM) 603. Various programs and data which are required for the operations of the electronic device 600 may further be stored in the RAM 603. The processing apparatus 601, the ROM 602, and the RAM 603 are connected with each other through a bus 604. An input/output (I/O) interface 605 is also connected to the bus 604.

Generally, the following apparatus may be connected to the I/O interface 605: an input apparatus 606 including, for example, a touch screen, a touchpad, a keyboard, a mouse, a camera, a microphone, an accelerometer, a gyroscope, etc.; an output apparatus 607 including, for example, a liquid crystal display (LCD), a speaker, a vibrator, etc.; a storage apparatus 608 including, for example, a magnetic tape, a hard drive, etc.; and a communication apparatus 609. The communication apparatus 609 may allow the electronic device 600 to communicate with other devices in a wireless manner or a wired manner to exchange data. Although FIG. 6 shows the electronic device 600 with various apparatuses, it should be understood that, it is not required to implement or possess all the shown apparatuses. More or fewer apparatuses may be alternatively implemented or possessed. Each box shown in FIG. 6 may represent one apparatus, or may represent a plurality of apparatuses as needed.

Particularly, according to some examples of the present disclosure, the process described below with reference to the flow diagram may be realized as a computer software program. For example, some examples of the present disclosure include a computer program product which includes a computer program hosted in a computer-readable medium, and the computer program contains a program code for executing the method shown in the flow diagram. In such examples, the computer program may be downloaded and installed from a network through the communication apparatus 609, or be installed from the storage apparatus 608, or be installed from the ROM 602. When the computer program is executed by the processing apparatus 601, the functions defined in the method in some examples of the present disclosure are executed.

It needs to be noted that, the computer-readable medium in some examples of the present disclosure may be a computer-readable signal medium or a computer-readable storage medium or any combination of the two. The computer-readable storage medium may be, for example, but not limited to, an electrical system, apparatus or component, a magnetic system, apparatus or component, an optical system, apparatus or component, an electromagnetic system, apparatus or component, an infrared system, apparatus or component, or a semiconductor system, apparatus or component, or any combination of the above. More specific instances of the computer-readable storage medium may include, but are not limited to: an electrical connector with at least one conducting wire, a portable computer disk, a hard disk, a random access memory (RAM), a read-only memory (ROM), an erasable-programmable read-only memory (EPROM or flash memory), an optical fiber, a portable compact disk read-only memory (CD-ROM), an optical storage element, a magnetic storage element, or any suitable combination of the above. In some examples of the present disclosure, the computer-readable storage medium may be any tangible medium containing or storing a program, and the program may be used by or in combination with an instruction execution system, apparatus or component. In some examples of the present disclosure, the computer-readable signal medium may include data signals propagated in a baseband or as part of a carrier, and computer-readable program codes are hosted in the data signals. A plurality of forms may be adopted for the propagated data signals, and include but are not limited to electromagnetic signals, optical signals, or any suitable combination of the above. The computer-readable signal medium may also be any computer-readable medium other than a computer-readable storage medium, and may send, propagate, or transmit a program used by or in combination with an instruction execution system, apparatus or component. The program codes contained in the computer-readable medium may be transmitted by using any suitable medium, and the medium includes but is not limited to: an electric wires, an optical cable, radio frequency (RF), etc., or any suitable combination of the above.

In some examples, a client and a server may communicate by using any currently-known or future-developed network protocol such as Hyper Text Transfer Protocol (HTTP), and may interconnect with digital data communication (for example, a communication network) in any form or medium. The instances of the communication network include a local area network ("LAN"), a wide area network ("WAN"), an Internet network (such as the Internet), an end-to-end network (such as an ad hoc end-to-end network), and any currently-known or future-developed network.

The computer-readable medium may be contained in the electronic device, and may also exist separately without being assembled into the electronic device. One or more programs are hosted in the computer-readable medium, and when the one or more programs are executed by the electronic device, the electronic device is enabled to: obtain mailing information related to a target article and filled by a target user in advance, where the mailing information includes: article mailing address information, article property information, and article mailing service information; according to logistics property information of logistics products, screen out at least one logistics product that matches the article property information and the article mailing service information from the logistics products, so as to obtain a logistics product set after the first screening; screen out the logistics products with collection station information and delivery station information from the logistics product set after the first screening, so as to obtain a logistics product set after the second screening, where the collection station information and the delivery station information are station information associated with the article mailing address information; and according to the logistics product set after the second screening, determine a target logistics product for mailing the target article.

The computer program codes for executing the operations of some examples of the present disclosure may be written in one or more programming languages or a combination thereof, and the programming languages include object-oriented programming languages such as Java, Smalltalk, C++, and conventional procedural programming languages such as "C" language or similar programming languages. The program codes may be completely executed in a computer of a user, partially executed in a computer of a user, executed as an independent software package, partially executed in a computer of a user and partially executed in a remote computer, or completely executed in a remote computer or a server. In cases involving the remote computer, the remote computer may be connected to a computer of a user through any type of network, including a local area network (LAN) or a wide area network (WAN), or may be connected to an external computer (such as being connected through the Internet and by using an Internet service provider).

The flow diagrams and block diagrams in the drawings show the architectures, functions and operations which are possibly realized by the systems, methods and computer program products according to the examples of the present disclosure. In this regard, each box in the flow diagrams or the block diagrams may represent a module, a program segment, or part of a code, and the module, the program segment, or part of the code contains at least one executable instruction for realizing a specified logical function. It should also be noted that, in some alternative realizations, the functions annotated in the boxes may also occur in an order different from the orders annotated in the drawings. For example, two consecutive boxes may actually be executed substantially in parallel, or may sometimes be executed in a reverse order, which depends on the functions involved. It should also be noted that, each box in the block diagrams and/or the flow diagrams, and a combination of the boxes in the block diagrams and/or the flow diagrams, may be realized by a dedicated hardware-based system which executes a specified function or operation, or may be realized by a combination of dedicated hardware and computer instructions.

The units described in some examples of the present disclosure may be realized in a manner of software or hardware. The described units may also be arranged in a processor, for example, it may be described as that: a processor includes a first obtaining unit, a first screening unit, a second screening unit and a determination unit. The names of these units do not constitute limitations to the units in a certain case, for example, the obtaining unit may also be described as a "unit obtaining mailing information related to a target article and filled by a target user in advance".

The functions described above in the present disclosure may be at least partially executed by at least one hardware logic component. For example, non-restrictively, demonstration types of the hardware logic components capable of being used include: a field programmable gate array (FPGA), an application-specific integrated circuit (ASIC), an application-specific standard product (ASSP), a system on chip (SOC), a complex programmable logic device (CPLD), etc.

The above description is only some preferred examples of the present disclosure and an explanation for the technical principles used. Those skilled in the art should understand that, the invention scope referred to in the examples of the present disclosure is not limited to the technical solutions formed by specific combinations of the technical features, but should also cover other technical solutions formed by any combination of the technical features or equivalent features without departing from the invention concept. For example, technical solutions formed by replacing the features with (but not limited to) technical features with similar functions in the examples of the present disclosure are included.

## Claims

1. A method for determining a logistics product, comprising:
obtaining mailing information related to a target article and filled by a target user in advance, wherein the mailing information comprises: article mailing address information, article property information, and article mailing service information;
according to logistics property information of logistics products, screening out at least one logistics product that matches the article property information and the article mailing service information from the logistics products, so as to obtain a logistics product set after the first screening;
screening out the logistics products with collection station information and delivery station information from the logistics product set after the first screening, so as to obtain a logistics product set after the second screening, wherein the collection station information and the delivery station information are station information associated with the article mailing address information; and
according to the logistics product set after the second screening, determining a target logistics product for mailing the target article.

2. The method according to claim 1, wherein the according to the logistics product set after the second screening, determining a target logistics product for mailing the target article comprises:
screening out the logistics products which are already available in a target store from the logistics product set after the second screening, so as to obtain a logistics product set after the third screening, wherein the target store is a store for mailing the target article; and
according to the logistics product set after the third screening, determining the target logistics product for mailing the target article.

3. The method according to claim 2, wherein the according to the logistics product set after the third screening, determining the target logistics product for mailing the target article comprises:
in response to the determination for that a target logistics product exists in the logistics product set after the third screening, determining at least one target logistics product, wherein the target logistics product comprises: logistics products of the type of same-city mailing;
screening out logistics products with routes to reach the collection station information and the delivery station information from the at least one target logistics product, so as to obtain a logistics product set after the fourth screening;
in response to the determination for that the target store sets priority levels for the logistics product set after the fourth screening, obtaining the priority level set by the target store in advance, of each logistics product in the logistics product set after the fourth screening; and
determining the logistics product with the priority level which meets a target condition in the logistics product set after the fourth screening as the target logistics product.

4. The method according to claim 3, further comprising:
in response to the determination for that the target logistics product does not exist in the logistics product set after the third screening, screening out logistics products with routes to reach the collection station information and the delivery station information from the logistics product set after the third screening, so as to obtain a logistics product set after the fifth screening;
in response to the determination for that the target store sets priority levels for the logistics product set after the fifth screening, obtaining the priority level of each logistics product in the logistics product set after the fifth screening; and
determining the logistics product with the priority level which meets the target condition in the logistics product set after the fifth screening as the target logistics product.

5. The method according to one of claims 1 to 4, wherein the logistics property information comprises:
weight requirement information of the article to be mailed, height requirement information of the article to be mailed, width requirement information of the article to be mailed, length requirement information of the article to be mailed, and temperature requirement information of the article to be mailed; and
the according to logistics property information of logistics products, screening out at least one logistics product that matches the article property information and the article mailing service information from the logistics products, so as to obtain a logistics product set after the first screening comprises: screening out logistics products with the article property information of the target article, which meets the weight requirement information, the height requirement information, the width requirement information, the length requirement information and the temperature requirement information, and related to the article mailing service information, so as to obtain a logistics product set after the first screening.

6. The method according to claim 4, wherein the method further comprises:
in response to the determination for that the target store does not set priority levels for the logistics product set after the fifth screening, determining alternative priority levels of the logistics products;
according to the alternative priority levels of the logistics products, determining the priority level of each logistics product in the logistics product set after the fifth screening; and
determining the logistics product with the priority level which meets the target condition in the logistics product set after the fifth screening as the target logistics product.

7. The method according to one of claims 1 to 6, further comprising: pushing the mailing information of the target logistics product to a terminal used by the target user.

8. An apparatus for determining a logistics product, comprising:
an obtaining unit which is configured to obtain mailing information related to a target article and filled by a target user in advance, wherein the mailing information comprises: article mailing address information, article property information, and article mailing service information;
a first screening unit which is configured to, according to logistics property information of logistics products, screen out at least one logistics product that matches the article property information and the article mailing service information from the logistics products, so as to obtain a logistics product set after the first screening;
a second screening unit which is configured to, screen out the logistics products with collection station information and delivery station information from the logistics product set after the first screening, so as to obtain a logistics product set after the second screening, wherein the collection station information and the delivery station information involve stations associated with the article mailing address information;
and a determination unit which is configured to, according to the logistics product set after the second screening, determine a target logistics product for mailing the target article.

9. An electronic device, comprising:
at least one processor; and
a storage apparatus, configured to store at least one programs, wherein
the at least one programs, when executed by the at least one processors, enable the at least one processors to implement the method according to any one of claims 1 to 7.

10. A computer-readable medium, storing a computer program thereon, wherein, the method according to any one of claims 1 to 7 is implemented when the program is executed by a processor when the program is executed by a processor.
